# EUROPÄISCHE PATENTSCHRIFT

(11) **EP 1 155 917 B1**
(45) Veröffentlichungstag und Bekanntmachung des Hinweises auf die Patenterteilung: **28.07.2004**
(21) Anmeldenummer: 01111434.5
(22) Anmeldetag: 10.05.2001
(51) Int. Cl.: B60R 13/04, B60R 13/07

(54) **Schieber zum Verschliessen einer Befestigungsöffnung in einer Abdeckleiste für einen Dachkanal eines Kraftfahrzeuges**
Slide for closing an opening for securing in a cover strip of a vehicle roof rack channel
Trappe coulissante recouvrant une ouverture de fixation dans un profilé de gouttière de toit de véhicule

(30) Priorität: 19.05.2000 DE 10024822; 22.12.2000 DE 10064181
(43) Veröffentlichungstag der Anmeldung: 21.11.2001
(73) Patentinhaber: DURA Automotive Body & Glass Systems GmbH & Co. KG, 58840 Plettenberg (DE); A. Raymond & Cie, 38028 Grenoble (FR)
(72) Erfinder: Tremmel, Günter, 79739 Schwörstadt (DE); Regensburger, Jan, 79400 Kandern (DE); König, Andreas, 59846 Sundern (DE)
(74) Vertreter: Zinnecker, Armin, Dipl.-Ing.

(56) Entgegenhaltungen:
- EP-A- 0 553 415
- EP-A- 0 730 998
- DE-A- 3 313 327
- DE-A- 19 840 295

## Beschreibung

Die Erfindung betrift einen Schieber zum Verschließen einer Befestigungsöffnung in einer Abdeckleiste für einen Dachkanal eines Kraftfahrzeugs nach dem Oberbegriff des Anspruchs 1. Die Befestigungsöffnung dient der Integration bzw. Fixierung eines Dachträgers.

Aus der DE-PS 33 13 327 ist ein Schieber zum Verschließen einer Befestigungsöffnung in einer Abdeckleiste für einen Dachkanal eines Kraftfahrzeugs bekannt. Der Schieber kann in eine Verschlußstellung gebracht werden, in der er die Öffnung abdeckt, und in eine Öffnungsstellung, in der er die Öffnung freigibt, also zugänglich macht. Das Befestigungselement kann eine der in der DE-PS 33 13 327 beschriebenen Ausgestaltungen haben. Es sind aber auch andere Befestigungselemente möglich, beispielsweise Gewindehülsen, die eingeschweißt sein können, oder weitere Befestigungselemente zum lösbaren oder nicht lösbaren Befestigen eines Bauteils, insbesondere eines Dachlastenträgers.

Bei der DE-PS 33 13 327 kann der Schieber unter die Abdeckleiste geschoben werden. Er nimmt in seiner Öffnungsstellung eine von außen verdeckte Lage unter der Abdeckleiste ein. Bei geringen Platzverhältnissen ist es allerdings in bestimmten Fällen nicht möglich, diese Ausgestaltung anzuwenden.

Ein Schieber nach dem Oberbegriff des Anspruchs 1 ist aus der EP-A-730 998 bekannt.

Aufgabe der Erfindung ist es, einen Schieber der eingangs angegebenen Art zu schaffen, die auch bei geringen Platzverhältnissen ausführbar ist.

Gemäß der Erfindung wird diese Aufgabe durch die kennzeichnenden Merkmale des Anspruchs 1 gelöst. Der Schieber umfaßt einen Deckelclip, einen Führungsclip und einen Deckel, der an einem Ende relativ zum Führungsclip eindrückbar ist. Vorzugsweise ist zwischen Deckelclip und Führungsclip eine Druckfeder, vorzugsweise aus Metall, vorgesehen. Das Ende des Deckels kann gegen die Kraft der Druckfeder eingedrückt werden. In der Abdeckleiste kann eine Führung für das eindrückbare Ende des Schiebers vorgesehen sein. An dem anderen Ende der Öffnung, also an demjenigen Ende, das dem eindrückbaren Ende gegenüberliegt, ist eine weitere vorzugsweise gleiche Clipsbaugruppe vorgesehen, in der sich vorzugsweise eine weitere Druckfeder befindet.

Der Schieber umfasst einen Deckel, zwei Deckelclipse und zwei Führungsclipse, wobei der Deckel an einem Ende unverschiebbar und am anderen Ende längsverschieblich von je einem Deckelclips gehalten ist. Die Deckelclipse können auf den Führungsclipsen federnd abgestützt und zwischen zwei Stellungen vertikal verschieblich geführt sein. Die Führungsclipse können ihrerseits längs der Öffnung verschieblich geführt sein, wobei der am hinteren Ende des Deckels angeordnete Führungsclip in der Öffnungsstellung vor der hinteren Querkante der Öffnung anliegt. Der Deckel kann an beiden Enden abgesetzte Kanten aufweisen, welche in der Schließstellung die vordere Querkante und die hintere Querkante der Öffnung untergreifen und zum Öffnen soweit anhebbar sind, daß sie mit dem Deckel zusammen über die Abdeckleiste verschiebbar sind. Der Deckel ist an einem Ende relativ zur Abdeckleiste eindrückbar. Wenn der Schieber von der Verschlußstellung in die Öffnungsstellung gebracht werden soll, wird der Deckel an diesem Ende eingedrückt und soweit unter die vordere Querkante der Öffnung geschoben, bis die hintere Kante freiliegt und an der hinteren Querkante der Öffnung vorbei nach oben gedrückt wird. Anschließend wird der Schieber in Richtung des anderen Endes verschoben. In der Öffnungsstellung befindet sich das Deckelteil des Schiebers dann über der Außenseite der Abdeckleiste.

Vorteilhafte Weiterbildungen sind in den Unteransprüchen beschrieben.

Vorzugsweise sind die Führungsclipse zwischen zwei längs der Öffnung übereinanderliegenden Seitenkanten der Abdeckleiste verschieblich geführt. Hierdurch wird eine besonders platzsparende Lösung geschaffen.

Eine weitere vorteilhafte Weiterbildung ist dadurch gekennzeichnet, daß der Dekkelclip an einem Ende des Deckels relativ zum Führungsclip gegen die Kraft einer zwischen Deckelclip und Führungsclip eingebauten Druckfeder eindrückbar und mit dem Ende soweit unter die vordere Querkante der Abdeckleiste verschiebbar ist, daß die abgesetzte Kante am anderen Ende des Deckels bis vor die Querkante bewegt und aufgrund der zwischen Deckelclip und Führungsclip eingebauten Druckfeder über die Abdeckleiste angehoben wird.

Nach einer weiteren vorteilhaften Weiterbildung sind unterhalb der Deckelclipse Seitenwände zur Aufnahme der Druckfeder angeformt, welche sich mit einem Ende an der Unterseite des Deckelclipses und mit dem anderen Ende an einem Mittelsteg des Führungsclipses abstützt.

Die Seitenwände können mit zueinander abgewinkelten Rastkanten versehen sein, welche den Mittelsteg des Führungsclipses beiderseits hintergreifen.

Nach einer weiteren vorteilhaften Weiterbildung weist der Deckelclip seitlich abstehende Anschlagkanten auf, welche unterhalb der oberen Seitenkante der Abdeckleiste verlaufen und dadurch die durch die Kraft der Druckfeder bewirkte Anhebung des Deckels nach oben begrenzen.

Eine weitere vorteilhafte Weiterbildung ist dadurch gekennzeichnet, daß der Deckel am vorderen Ende im Anschluß an die abgesetzte Kante durch eine schräg nach unten vorstehende Einführrampe verlängert ist und daß das vordere Ende des Deckels in Verschlußstellung von der vorderen Querkante der Öffnung einen Abstand besitzt, welcher gleich oder etwas größer ist als die Breite der abgesetzten Kante am hinteren Ende.

Vorteilhaft ist es, wenn der Führungsclip quer zur Längsrichtung der Abdeckleiste verlaufende Seitenwände besitzt, zwischen denen der Deckelclip eingesetzt und vertikal verschieblich geführt ist, wenn zwischen dem Deckelclip und der entgegen der Öffnungsrichtung angeordneten Seitenwand des Führungsclips in VerschlußStellung des Deckels ein Spalt vorgesehen ist, dessen Breite der Breite der abgesetzten Kante entspricht, und wenn an der beabstandeten Seitenwand des Führungsclips den Spalt überbrückende Federfinger angeformt sind, welche den Dekkelclip auffederbar gegen die andere Seitenwand drücken.

Ausführungsbeispiele der Erfindung werden nachstehend anhand der beigefügten Zeichnung im einzelnen erläutert. In der Zeichnung zeigt
- Fig. 1: die Abdeckleiste und den Schieber in der Verschlußstellung in einer perspektivischen Ansicht,
- Fig. 2: die Anordnung gemäß Fig. 1 nach dem Eindrücken eines Endes des Schiebers,
- Fig. 3: die Anordnung gemäß Fig. 1 und Fig. 2 in der Öffnungsstellung,
- Fig. 4: eine erste Ausführungsform der Erfindung in einem Schnitt längs der Linie A-A und längs der Linie F-F in Fig. 1,
- Fig. 5: einen Schnitt längs der Linie G-G in Fig. 2,
- Fig. 6: einen Schnitt längs der Linie D-D in Fig. 3,
- Fig. 7: einen Schnitt längs der Linie E-E in Fig. 1,
- Fig. 8: einen Schnitt längs der Linie B-B in Fig. 2,
- Fig. 9: einen Schnitt längs der Linie C-C in Fig. 3,
- Fig. 10: die Einzelteile des Schiebers im nicht montierten Zustand in einer perspektivischen Darstellung,
- Fig. 11: eine weitere Ausführungsform der Erfindung in einem Längsschnitt,
- Fig. 12: die Auführungsform gemäß Fig. 11 in einer perspektivischen Darstellung,
- Fig. 13: die Ausführungsform gemäß den Figuren 11 und 12 in einer der Fig. 7 entsprechenden Darstellung,
- Fig. 14: die Ausführungsform gemäß Figuren 11 bis 13 in einer der Fig. 8 entsprechenden Darstellung und
- Fig. 15: die Ausführungsform gemäß Fig. 11 bis Fig. 14 in einer der Fig. 9 entsprechenden Darstellung.

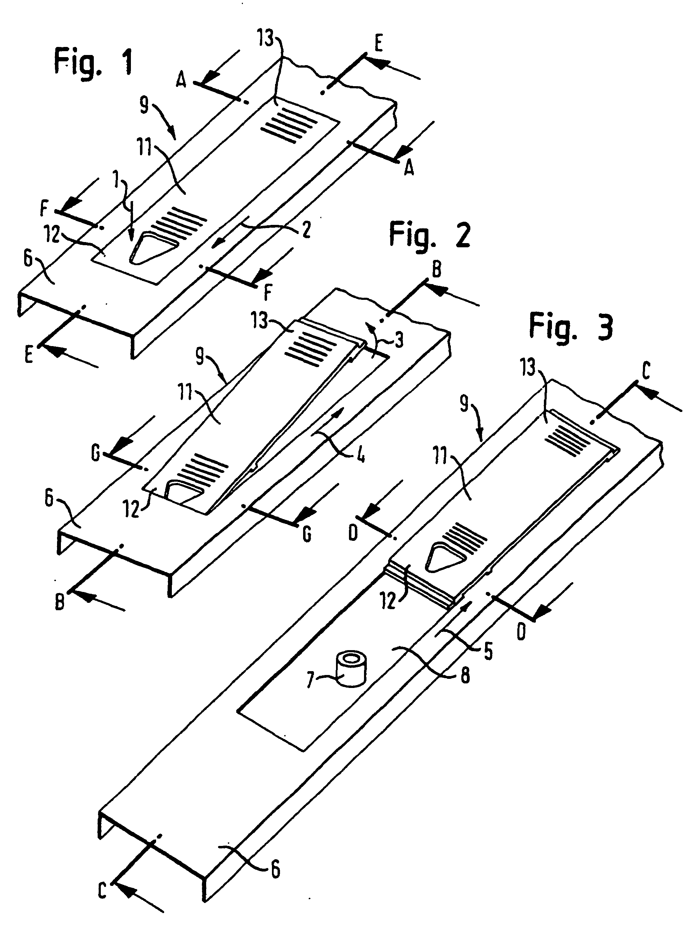

Die Figuren 1 bis 3 zeigen einen Teil einer Abdeckleiste 6 für ein in einem Fahrzeugdach vorgesehenes Befestigungselement 7 in Form einer Gewindehülse. In der Abdeckleiste 6 ist eine Öffnung 8 vorhanden, die durch einen Schieber 9 verschließbar ist. Der Schieber 9 umfaßt einen Deckel 11, zwei Deckelclipse 14 und zwei Führungsclipse 20. Ferner sind Druckfedern 17 aus Metall vorgesehen.

In Fig. 1 befindet sich der Schieber 9 in der Verschlußstellung, in der er die Öffnung 8 praktisch vollständig abdeckt. Die Oberfläche des Deckels 11 schließt bündig mit der Oberfläche der Abdeckleiste 6 ab.

Wie aus Fig. 2 ersichtlich ist der Deckel 11 in Verbindung mit dem Deckelclip 14 an einem Ende 12 relativ zum Führungsclip 20 eindrückbar. In Fig. 2 ist die Stellung gezeigt, die der Schieber einnimmt, wenn das Ende 12 eingedrückt wird.

Fig. 3 zeigt den Schieber 9 in der die Öffnung 8 einschließlich des Befestigungselements 7 freigebenden Öffnungsstellung, in der sich der Schieber 9 auf der Abdeckleiste 6 befindet.

Aus den Figuren 1 bis 3 wird die Funktion des Schiebers 9 ersichtlich. Um den Schieber 9 aus der Fig. 1 gezeigten Verschlußstellung in die Öffnungsstellung zu bringen, wird zunächst das Ende 12 des Schiebers 9 in Richtung des Pfeils 1 eingedrückt. Der Schieber wird ferner geringfügig in Richtung des Pfeils 2 verschoben, also in Richtung zum Ende 12 hin. Hierdurch wird der Schieber 9 im Bereich seines anderen (hinteren) Endes 13 entriegelt. Er federt dort in Richtung des Pfeils 3 auf. Wenn diese Stellung erreicht ist, wird der Schieber 9 nach hinten, also in Richtung des Pfeiles 4 (entgegengesetzt zur Pfeilrichtung 2) verschoben.

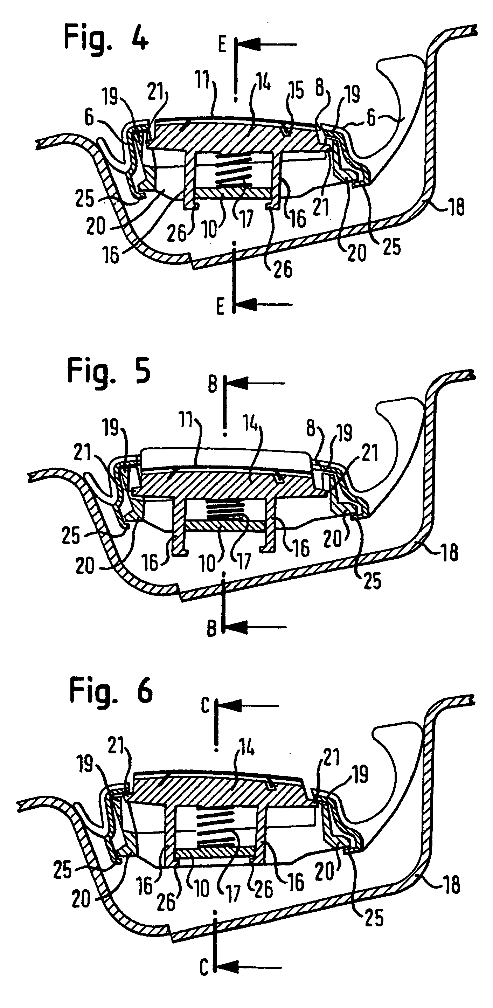

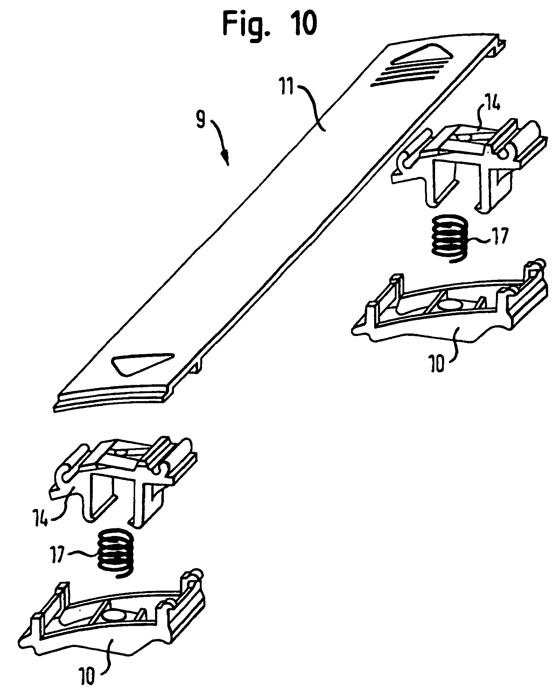

Wie aus den Figuren 4 bis 10, die eine erste Ausführungsform der Erfindung zeigen, ersichtlich besteht der Deckel 11 des Schiebers 9 aus einem Deckelclip 14, in dessen Oberseite Vertiefungen vorgesehen sind, in die der Deckel 11 mit an der Unterseite angeformten Stegen 20 eingedrückt und längsverschieblich geführt ist. Der Deckelclip 14 ist mit nach unten abstehenden Wänden 16 zur Aufnahme für eine Druckfeder 17 versehen, die sich mit einem Ende an der Unterseite des Dekkelclipses 14 und mit dem anderen Ende an einem Mittelsteg 10 des Führungsclipses 20 abstützt. Die Wände 16 sind an ihren unteren Enden mit zueinander abgewinkelten Rastkanten 26 versehen, welche den Mittelsteg 10 beidseitig hintergreifen und so die von der Druckfeder 17 ausgehende Verschiebebewegung nach oben begrenzen. Die gesamte Anordnung befindet sich in einem Dachkanal 18, in welchem eine Abdeckleiste 6 vorgesehen ist, die den Schieber 9 aufnimmt.

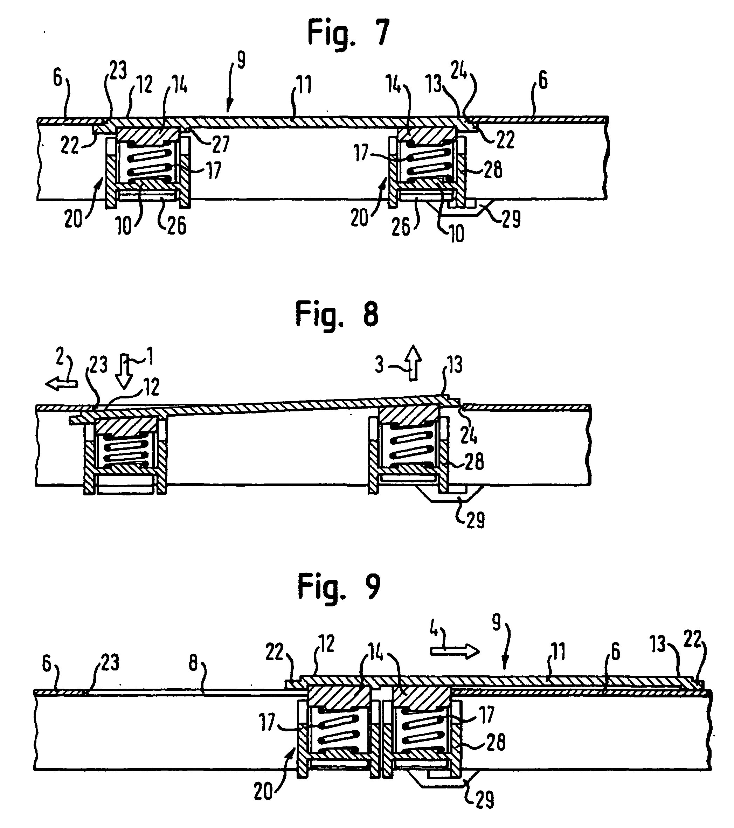

Wie aus Fig. 6 ersichtlich, hintergreifen von dem Deckelclip 14 seitlich abstehende Anschlagkanten 21 die oberen Seitenkanten 19 der Befestigungsöffnung 8, wodurch die durch die Druckfeder 17 bewirkte Anhebung des Deckels11 nach oben begrenzt wird. Wenn sich der Schieber in der Verschlußstellung befindet, die in den Figuren 4 und 7 gezeigt ist, wird der Deckel 11 durch Absätze 22 gehalten, die die Enden 12, 13 des Deckels 11 überragen und unter den Querkanten 23 und 24 der Öffnung 8 zu liegen kommen. Hierbei ist der Deckelclip 14 mittels einer Querrippe 27 zum Deckel 11 unverschiebbar festgelegt.

Nach dem Eindrücken des Endes 12 des Schiebers 11 in Richtung des Pfeiles 1 und einem geringfügigen Verschieben dieses Endes 12 in Richtung des Pfeiles 2 wird die in den Figuren 5 und 8 gezeigte Stellung erreicht, in der die Druckfeder 17 am linken Ende 12 zusammengedrückt ist und das andere Ende 13 des Deckels 11 freigegeben ist. Der Absatz 22 im Bereich des Endes 13 ist durch die Kraft der gleichen Druckfeder 17 in der insbesondere aus Figur 8 ersichtlichen Weise nach oben bewegt worden. Diese Druckfeder 17 stützt sich mit ihrem oberen Ende an dem Deckelclip 14 ab. Das untere Ende wird von dem Mittelsteg 10 eines weiteren Führungsclipses 20 abgestützt.

Nach dem Verschieben des Deckels 11 in Richtung des Pfeiles 4 wird die in den Figuren 6 und 9 gezeigte Öffnungsstellung erreicht. Der Deckel 11 liegt über der Abdeckleiste 6 und die Öffnung 8 ist freigegeben.

Will man den Deckel 11 aus dieser Öffnungsstellung in die Verschlußstellungbringen, so muß der Deckel 11 entgegen der Richtung des Pfeiles 4 nach links verschoben werden und das vordere Ende 12 bei Erreichen der Querkante 23 nach unten gedrückt und ein wenig in Richtung des Pfeiles geschoben werden, bis das hintere Ende 13 an der Querkante 24 vorbei nach unten gedrückt werden kann. Sodann wird der Deckel 11 wieder nach rechts verschoben, bis die Absätze 22 unter den Querkanten 23 und 24 zu liegen kommen und der Deckel 11 genau die Öffnung 8 verschließt. Damit der Führungsclip 20 an der rechten Seite beim Verschieben des Deckels 11 nach links nicht mitwandert, ist unterhalb des Führungsclipses 20 beiderseits der Seitenwand 28 ein Doppelanschlag 29 vorgesehen, der gemäß der Figur 8 die Linksbewegung und gemäß Fig. 9 die Rechtsbewegung begrenzt.

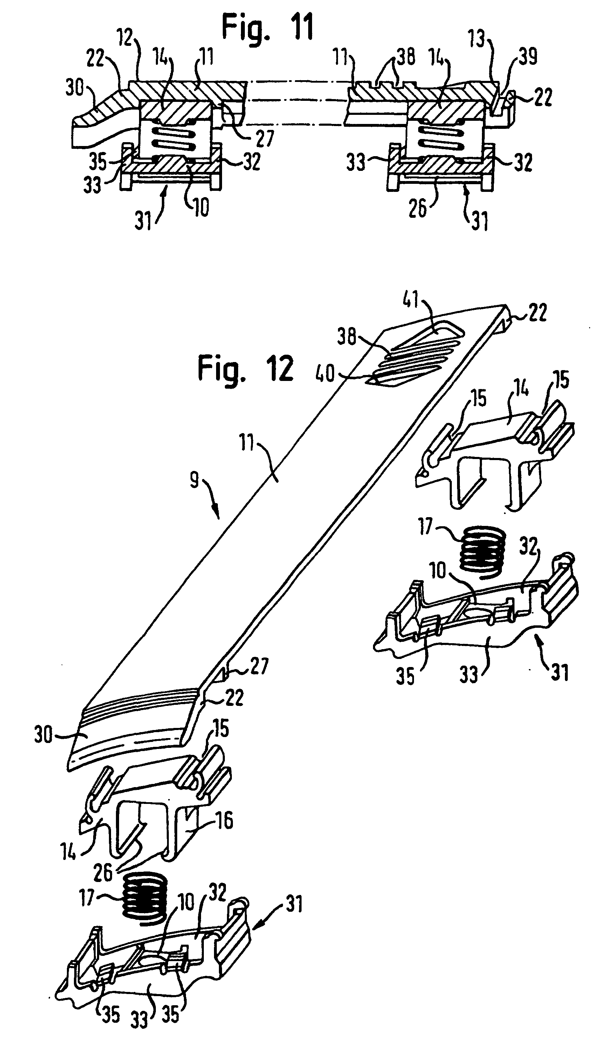

In den Figuren 11 bis 15 ist eine andere Ausführungsform des erfindungsgemäßen Schiebers dargestellt, wobei die mit der ersten Ausführungsform übereinstimmenden Teile mit den gleichen Bezugszeichen versehen sind und auf die Figurenbeschreibung zu den Figuren 4 bis 10 verwiesen wird.

Diese Ausführungsform unterscheidet sich von der vorigen Form dadurch, daß der Deckel 11 am vorderen Ende 12 im Anschluß an die abgesetzte Kante 22 durch eine schräg nach unten vorstehende Einführrampe 30 verlängert ist. Diese ist so weit nach unten verlängert, daß sie beim Verschieben des Deckels 11 in Verschlußstellung von der Hochlage aus die Querkante 23 untergreift. Außerdem besitzt das vordere Ende des Deckels in Verschlußstellung von der vorderen Querkante 23 der Öffnung 8 einen Abstand "a" welcher gleich oder um ein geringes größer ist als die Breite "b" der abgesetzten Kante 22 am hinteren Ende 13.

Der mit "31" bezeichnete Führungsclip besitzt quer zur Längsrichtung der Abdeckleiste 16 verlaufende Seitenwände 32 und 33, mit welchen der Führungsclip 31-genau wie der Führungsclip 20 - zwischen den oberen Seitenkanten 19 und unteren Seitenkanten 25 der Abdeckleiste 6 im Bereich der Öffnung 8 verschieblich geführt ist. Zwischen diesen Seitenwänden 32 und 33 ist der Deckelclip 14 eingesetzt und vertikal verschieblich geführt, wobei die durch die Druckfeder 17 bewirkte Bewegung nach oben durch die Rastkanten 26 der Seitenwände 16 und den Mittelsteg 10 begrenzt ist.

Zwischen dem Deckelclip 14 und der entgegen der Öffnungsrichtung angeordneten Seitenwand 33 des Führungsclipses 31 ist in Verschlußstellung des Deckels 11 ein Spalt 34 vorgesehen, dessen Breite "s" der Breite "b" der abgesetzten Kante 22 entspricht. Außerdem sind an der beabstandeten Seitenwand 33 Federfinger 35 angeformt, welche von der Seitenwand 33 aus den Spalt 34 bis zur Anlage an den Deckelclip 14 überbrücken und diesen auffederbar gegen die andere Seitenwand 32 drücken.

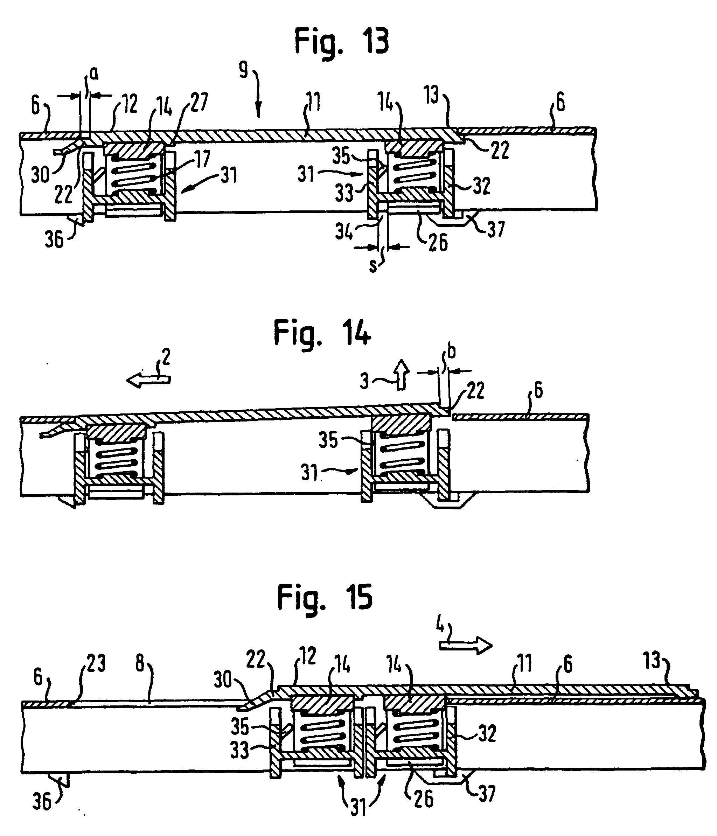

Der Bewegungsablauf beim Öffnen des Deckels 11 ist in den Figuren 13 bis 15 anschaulich dargestellt. Zunächst wird der Deckel 11 in Richtung des Pfeiles 2 gegen die Federkraft des Federfingers 35 so weit nach links verschoben, bis der Spalt "a " zwischen Deckel 11 und Querkante 23 der Öffnung 8 weggedrückt ist. Damit die Federkraft sich aufbauen kann, muß der Führungsclip 31 am rechten Ende 13 des Deckels 11 durch den Doppelanschlag 37 festgehalten werden. Da der Führungsclip 31 am linken Ende 12 aus Gründen der Einheitlichkeit gleich ausgebildet ist und zum Aufbau der Federkraft ebenfalls festgehalten werden muß, ist auch hinter dessen Seitenwand 33 ein Anschlag 36 vorgesehen. Durch das Verschieben des Deckels 11 nach links geht am anderen Ende 13 die abgesetzte Kante 22 frei und wird dank der Druckfeder 17 nach oben geschoben, bis die Kante 22 sich in der in Figur 14 gezeigten Lage über der Abdeckleiste 6 befindet.

Nun kann der Deckel 11 in Richtung des Pfeiles 4 so weit nach links verschoben werden, bis der linke, vom Deckel mitgenommene Führungsclip 31 am rechten Führungsclip 31 anschlägt. Dieser wiederum wird bis zur rechten Anlage am Doppelanschlag 37 verschoben und von diesem festgehalten. Sobald das linke Ende 12 von der oberen Querkante 23 freikommt, federt dieses Ende dank der Druckfeder 17 ebenfalls in die obere Lage, so daß der Deckel 11 die in Figur 15 gezeigte Lage einnimmt und die Öffnung 8 mit dem darin befindlichen, in Figur 3 angedeuteten Befestigungselement 7 freiliegt.

Zum Verschieben des Deckels 11 ist an dessen rechten Ende 13 eine Querriffelung 38 in die Oberfläche eingeformt, welche den Fingern Halt bieten soll. Außerdem zeigen unterschiedlich große Dreiecke 40, 41 an, welche Richtung (40) zum Lösen dient und welche Richtung (41) in die Öffnungsstellung führt. Für den Fall, daß beim Verschieben nach links die Kraft der Finger nicht ausreicht, ist am rechten Ende 13 des Deckels 11 in der abgesetzten Kante 22 ein kleiner Schlitz 39 vorgesehen, in den die Spitze eines Schraubendrehers als Öffnungshilfe eingeführt werden kann.

## Patentansprüche

1. Schieber zum Verschließen einer Befestigungsöffnung (8) in einer Abdeckleiste für einen Dachkanal eines Kraftfahrzeugs, wobei der Schieber (9) in eine die Öffnung (8) abdeckende Verschlußstellung (Fig. 1, 4, 7) und in eine die Öffnung (8) freigebende Öffnungsstellung (Fig. 3, 6 und 9) bringbar ist, wobei der Schieber (9) einen Führungsclip (20) und einen Deckel (11) umfaßt, der an einem Ende (12) relativ zum Führungsclip (20) eindrückbar ist,
**dadurch gekennzeichnet,**
**dass** an dem anderen Ende (13) der Öffnung (8) ein weiterer Führungsclip (20) vorgesehen ist und dass der Deckel (11) an einem Ende (12) unverschiebbar und am anderen Ende (13) längsverschieblich von je einem Deckelclip (14) gehalten ist.

2. Schieber nach Anspruch 1, **gekennzeichnet durch** eine Druckfeder (17) zwischen Deckelclip (14) und Führungsclip (20).

3. Schieber nach Anspruch 1 oder 2, **dadurch gekennzeichnet, dass** in der Abdeckleiste (6) eine Führung für das eindrückbare Ende (12) des Schiebers (9) vorgesehen ist.

4. Schieber nach einem der vorhergehenden Ansprüche, **dadurch gekennzeichnet, dass** in dem weiteren Führungsclip (20) eine weitere Druckfeder (17) vorgesehen ist.

5. Schieber nach einem der vorhergehenden Ansprüche, **dadurch gekennzeichnet, dass** die Deckelclipse (14) auf den Führungsclipsen (20) federnd abgestützt und zwischen zwei Stellungen vertikal verschieblich geführt sind.

6. Schieber nach einem der vorhergehenden Ansprüche, **dadurch gekennzeichnet, dass** die Führungsclipse (20) längs der Öffnung (8) verschieblich geführt sind, wobei der am hinteren Ende (13) des Deckels (11) angeordnete Führungsclip (20) in der Öffnungsstellung vor der hinteren Querkante (24) der Öffnung (8) anliegt.

7. Schieber nach einem der vorhergehenden Ansprüche, **dadurch gekennzeichnet, dass** der Deckel (12) an beiden Enden (12, 13) abgesetzte Kanten (22) aufweist, welche in der Schließstellung die vordere Querkante (23) und die hintere Querkante (24) der Öffnung (8) untergreifen und zum Öffnen so weit anhebbar sind, dass sie mit dem Deckel (11) zusammen über die Abdeckleiste (6) verschiebbar sind.

8. Schieber nach einem der vorhergehenden Ansprüche, **dadurch gekennzeichnet, dass** die Führungsclipse (20) zwischen zwei längs der Öffnung (8) übereinander liegenden Seitenkanten (19, 25) der Abdeckleiste (6) verschieblich geführt sind.

9. Schieber nach einem der vorhergehenden Ansprüche, **dadurch gekennzeichnet, dass** der Deckelclip (14) an einem Ende (12) des Deckels (11) relativ zum Führungsclip (20) gegen die Kraft einer zwischen Deckelclip (14) und Führungsclip (20) eingebauten Druckfeder (17) eindrückbar und mit dem Ende (12) soweit unter die vordere Querkante (23) der Abdeckleiste (6) verschiebbar ist, dass die abgesetzte Kante (22) am anderen Ende (13) des Deckels (11) bis vor die Querkante (24) bewegt und aufgrund der zwischen Deckelclip (14) und Führungsclip (20) eingebauten Druckfeder (17) über die Abdeckleiste (6) angehoben wird.

10. Schieber nach einem der vorhergehenden Ansprüche, **dadurch gekennzeichnet, dass** unterhalb der Deckelclipse (14) Seitenwände (16) zur Aufnahme der Druckfeder (17) angeformt sind, welche sich mit einem Ende an der Unterseite des Deckelclipses (14) und mit dem anderen Ende an einem Mittelsteg (10) des Führungsclipses (20) abstützt.

11. Schieber nach Anspruch 10, **dadurch gekennzeichnet, dass** die Seitenwände (16) mit zueinander abgewinkelten Rastkanten (26) versehen sind, welche den Mittelsteg (10) des Führungsclipses (20) beiderseits hintergreifen.

12. Schieber nach einem der vorhergehenden Ansprüche, **dadurch gekennzeichnet, dass** der Deckelclip (14) seitlich abstehende Anschlagkanten (21) aufweist, welche unterhalb der oberen Seitenkante (19) der Abdeckleiste (6) verlaufen und dadurch die durch die Kraft der Druckfeder (17) bewirkte Anhebung des Deckels (11) nach oben begrenzen.

13. Schieber nach nach einem der vorhergehenden Ansprüche, **dadurch gekennzeichnet, dass** der Deckel (11) am vorderen Ende (12) im Anschluß an die abgesetzte Kante (22) durch eine schräg nach unten vorstehende Einführrampe (30) verlängert ist und dass das vordere Ende (12) des Deckels (11) in Verschlußstellung von der vorderen Querkante (23) der Öffnung (8) einen Abstand (a) besitzt, welcher gleich oder etwas größer ist als die Breite (b) der abgesetzten Kante (22) am hinteren Ende (13).

14. Schieber nach Anspruch 13, wobei der Führungsclip (31) quer zur Längsrichtung der Abdeckleiste (6) verlaufende Seitenwände (32, 33) besitzt, zwischen denen der Deckelclip (14) eingesetzt und vertikal verschieblich geführt ist, **dadurch gekennzeichnet, dass** zwischen dem Deckelclip (14) und der entgegen der Öffnungsrichtung angeordneten Seitenwand (33) des Führungsclips (31) in Verschlußstellung des Deckels (11) ein Spalt (34) vorgesehen ist, dessen Breite (s) der Breite (b) der abgesetzten Kante (22) entspricht, und dass an der beabstandeten Seitenwand (33) des Führungsclips (31) den Spalt (34) überbrückende Federfinger (35) angeformt sind, welche den Deckelclip (14) auffederbar gegen die andere Seitenwand (32) drücken.

## Claims

1. Slide for closing a securing opening (8) in a covering strip for a roof channel of a motor vehicle, it being possible for the slide (9) to be moved into a closed position (Fig. 1, 4, 7), in which it covers the opening (8), and an open position (Fig. 3, 6 and 9), in which it is clear of the opening (8), the slide (9) comprising a guide clip (20) and a cover (11), which can be depressed at one end (12) relative to the guide clip (20), **characterized in that** a further guide clip (20) is provided at the other end (13) of the opening (8), and **in that** the cover (11) at one end (12) is held in such a manner that it cannot be displaced and at the other end (13) is held in a longitudinally displaceable manner, by a cover clip (14) at each end.

2. Slide according to Claim 1, **characterized by** a compression spring (17) between cover clip (14) and guide clip (20).

3. Slide according to Claim 1 or 2, **characterized in that** a guide for the depressible end (12) of the slide (9) is provided in the covering strip (6).

4. Slide according to one of the preceding claims, **characterized in that** a further compression spring (17) is provided in the further guide clip (20).

5. Slide according to one of the preceding claims, **characterized in that** the cover clips (14) are supported resiliently on the guide clips (20) and are guided in such a manner that they can be displaced in the vertical direction between two positions.

6. Slide according to one of the preceding claims, **characterized in that** the guide clips (20) are guided in such a manner that they can be displaced along the opening (8), the guide clip (20) arranged at the rear end (13) of the cover (11), in the open position, bearing against the front of the rear transverse edge (24) of the opening (8).

7. Slide according to one of the preceding claims, **characterized in that** the cover (12) has, at both ends (12, 13), stepped-down edges (22) which, in the closed position, engage beneath the front transverse edge (23) and the rear transverse edge (24) of the opening (8) and, for opening purposes, can be raised up until they can be displaced over the covering strip (6) together with the cover (11).

8. Slide according to one of the preceding claims, **characterized in that** the guide clips (20) are guided in such a manner that they can be displaced between two side edges (19, 25), lying above one another along the opening (8), of the covering strip (6).

9. Slide according to one of the preceding claims, **characterized in that** the cover clip (14), at one end (12) of the cover (11), can be depressed relative to the guide clip (20), counter to the force of a compression spring (17) installed between cover clip (14) and guide clip (20), and the end (12) can be displaced under the front transverse edge (23) of the covering strip (6) until the stepped-down edge (22) at the other end (13) of the cover (11) moves to in front of the transverse edge (24) and is lifted up over the covering strip (6) on account of the compression spring (17) installed between cover clip (14) and guide clip (20).

10. Slide according to one of the preceding claims, **characterized in that** side walls (16) are formed integrally beneath the cover clips (14) for the purpose of receiving the compression spring (17), one end of which is supported on the underside of the cover clip (14) and the other end of which is supported on a centre web (10) of the guide clip (20).

11. Slide according to Claim 10, **characterized in that** the side walls (16) are provided with latching edges (26) which are angled off towards one another and engage behind the centre web (10) of the guide clip (20) on both sides.

12. Slide according to one of the preceding claims, **characterized in that** the cover clip (14) has laterally protruding stop edges (21) which run beneath the upper side edge (19) of the covering strip (6) and thereby limit the extent to which the cover (11) is lifted upwards by the force of the compression spring (17).

13. Slide according to one of the preceding claims, **characterized in that** the cover (11), at the front end (12), adjoining the stepped-down edge (22), is extended by an insertion ramp (30) which protrudes obliquely downwards, and **in that** the front end (12) of the cover (11), in the closed position, is at. a distance (a) from the front transverse edge (23) of the opening (8), which distance (a) is equal to or slightly greater than the width (b) of the stepped-down edge (22) at the rear end (13).

14. Slide according to Claim 13, in which the guide clip (31) has side walls (32, 33) which run transversely with respect to the longitudinal direction of the covering strip (6) and between which the cover clip (14) is inserted and guided in a vertically displaceable manner, **characterized in that** in the closed position of the cover (11) there is a gap (34), the width (s) of which corresponds to the width (b) of the stepped-down edge (22), between the cover clip (14) and the side wall (33), arranged opposite to the opening direction, of the guide clip (31), and **in that** spring fingers (35), which press the cover clip (14) on to the other side wall (32) in such a manner that it can be sprung open, are formed integrally on the spaced-apart side wall (33) of the guide clip (31) in such a manner as to bridge the gap (34).

## Revendications

1. Trappe coulissante de fermeture d'une ouverture de fixation (8) dans un profilé de recouvrement pour une gouttière d'un véhicule automobile, la trappe coulissante (9) étant susceptible d'être placée en une position de fermeture (Fig. 1, 4, 7) recouvrant l'ouverture (8) et en une position d'ouverture (Fig. 3, 6 et 9) libérant l'ouverture (8), la trappe coulissante (9) comprenant une attache de guidage (20) et un couvercle (11), pouvant être enfoncé à une extrémité (12), par rapport à l'attache de guidage (20), **caractérisée en ce que**,
sur l'autre extrémité (13) de l'ouverture (8) est prévue une autre attache de guidage (20), et **en ce que** le couvercle (11) est maintenu de façon indéplaçable à une extrémité (12) et de façon déplaçable longitudinalement à l'autre extrémité (13), chaque fois par une attache de couvercle (14).

2. Trappe coulissante selon la revendication 1, **caractérisée par** un ressort de compression (17), monté entre l'attache de couvercle (14) et l'attache de guidage (20).

3. Trappe coulissante selon la revendication 1 ou 2, **caractérisée en ce que** dans le profilé de recouvrement (6) est prévu un guidage pour l'extrémité (12), susceptible d'être enfoncée, de la trappe coulissante (9).

4. Trappe coulissante selon l'une des revendications précédentes, **caractérisée en ce que**, dans l'autre attache de guidage (20), est prévu un autre ressort de compression (17).

5. Trappe coulissante selon l'une des revendications précédentes, **caractérisée en ce que** les attaches de couvercle (14) sont soutenues élastiquement sur les attaches de guidage (20) et sont guidées de façon mobile verticalement entre deux positions.

6. Trappe coulissante selon l'une des revendications précédentes, **caractérisée en ce que** les attaches de guidage (20) sont guidées de façon déplaçable le long de l'ouverture (8), l'attache de guidage (20), déposée à l'extrémité arrière (13) du couvercle (11), appuyant, en position d'ouverture, devant le bord transversal (24) arrière de l'ouverture (8).

7. Trappe coulissante selon l'une des revendications précédentes, **caractérisée en ce que** le couvercle (12) présente, aux deux extrémités (12, 13), des bords (22) en position décalée vers l'intérieur, qui, en position de fermeture, saisissent par le dessous le bord transversal avant (23) et le bord transversal arrière (24) de l'ouverture (8) et qui, pour l'ouverture, sont susceptibles d'être levés à un degré faisant qu'ils peuvent être déplacés avec le couvercle (11), conjointement, par l'intermédiaire du profilé de recouvrement (6).

8. Trappe coulissante selon l'une des revendications précédentes, **caractérisée en ce que** les attaches de guidage (20) sont guidées de façon déplaçable le long de deux bords latéraux (19, 25), placés l'un au-dessus de l'autre le long de l'ouverture (8), du profilé de recouvrement (6).

9. Trappe coulissante selon l'une des revendications précédentes, **caractérisée en ce que** l'attache de couvercle (14) est susceptible d'être enfoncée à une extrémité (12) du couvercle (11) par rapport à l'attache de guidage (20), à l'encontre de la force exercée par un ressort de compression (17) inséré entre l'attache de couvercle (14) et l'attache de guidage (20), et est susceptible d'être déplacée à l'extrémité (12) ainsi qu'au-dessous du bord transversal avant (23) du profilé de recouvrement (6), de manière que l'arête (22) décalée vers le bas soit déplacée à l'autre extrémité (13) du couvercle (11) jusqu'à se trouver à l'avant du bord transversal (24) et que, du fait du ressort de compression (17) inséré entre l'attache de couvercle (14) et l'attache de guidage (20), est levée sur le profilé de recouvrement (6).

10. Trappe coulissante selon l'une des revendications précédentes, **caractérisée en ce qu'**au-dessous des attaches de couvercle (14) sont formées d'un seul tenant des parois latérales (16) pour supporter le ressort de compression (17), qui prend appui, par une extrémité, sur la face inférieure de l'attache de couvercle (14) et, par l'autre extrémité, sur une nervure centrale (10) de l'attache de guidage (20).

11. Trappe coulissante selon la revendication 10, **caractérisée en ce que** les parois latérales (16) sont munies d'arêtes d'encliquetage (26) coudées en direction l'une de l'autre, qui saisissent par l'arrière, des deux côtés, la nervure centrale (10) de l'attache de guidage (20).

12. Trappe coulissante selon l'une des revendications précédentes, **caractérisée en ce que** l'attache de couvercle (14) présente des bords de butée (21). en saillie latéralement, s'étendant au-dessous du bord latéral supérieur (19) du profilé de recouvrement (6) et délimitant vers le haut de ce fait la course de soulèvement du couvercle (11), course provoquée par la force du ressort de compression (17).

13. Trappe coulissante selon l'une des revendications précédentes, **caractérisée en ce que** le couvercle (11) est prolongé à l'extrémité avant (12), en raccordement au bord (22) décalé vers le bas, par une rampe d'introduction (30) en saillie obliquement vers le bas, et **en ce que** l'extrémité avant (12) du couvercle (11), à la position de fermeture, présente, par rapport au bord transversal avant (23) de l'ouverture (8), un espacement (a) identique ou un peu supérieur à la largeur (b) du bord (22) décalé vers le bas à l'extrémité arrière (13).

14. Trappe coulissante selon la revendication 13, l'attache de guidage (31) comportant des parois latérales (32, 33) s'étendant transversalement par rapport à la direction longitudinale du profilé de recouvrement (6), parois latérales entre lesquelles l'attache de couvercle (14) est insérée et guidée de façon mobile verticalement, **caractérisée en ce que**, entre l'attache de couvercle (14) et la paroi latérale (33) disposée à l'encontre de la direction d'ouverture, de l'attache de guidage (31), en position de fermeture de couvercle (11), est prévu un intervalle (34), dont la largeur (s) correspond à la largeur (b) du bord (22) décalé vers le bas, et **en ce que** des doigts élastiques (35), pontant l'intervalle (34) entre l'attache de couvercle (14) et la paroi latérale (33) espacée de l'attache de guidage (31), sont formés d'un seul tenant, les doigts élastiques pressant l'attache de couvercle (14) contre l'autre paroi latérale (32), de façon à permettre une ouverture par déformation élastique.
